# EUROPEAN PATENT APPLICATION

(11) **EP 3 605 692 A1**
(43) Date of publication of application: **05.02.2020**
(21) Application number: 18770639.5
(22) Date of filing: 22.03.2018
(51) Int. Cl.: H01M 8/1213, H01M 4/86, H01M 4/88, H01M 8/12, H01M 8/1286, H01M 8/0612

(54) **SUBSTRATE WITH ELECTRODE LAYER FOR METAL SUPPORT TYPE ELECTROCHEMICAL ELEMENT, ELECTROCHEMICAL ELEMENT, ELECTROCHEMICAL MODULE, SOLID OXIDE FUEL CELL, AND MANUFACTURING METHOD**

(30) Priority: 22.03.2017 JP 2017056731
(71) Applicant: Osaka Gas Co., Ltd., Osaka-shi, Osaka 541-0046 (JP)
(72) Inventor: ECHIGO Mitsuaki, Osaka-shi Osaka 541-0046 (JP); OHNISHI Hisao, Osaka-shi Osaka 541-0046 (JP); TSUDA Yuji, Osaka-shi Osaka 541-0046 (JP); MANABE Kyohei, Osaka-shi Osaka 541-0046 (JP); MINAMI Kazuyuki, Osaka-shi Osaka 541-0046 (JP); YAMAZAKI Osamu, Osaka-shi Osaka 541-0046 (JP)
(74) Representative: Lemcke, Brommer & Partner Patentanwälte Partnerschaft mbB
(86) International application number: PCT/JP2018/011441
(87) International publication number: WO 2018/174167

(57) **Abstract**

Provided is a low-cost electrochemical element that has excellent reliability and durability. A substrate with an electrode layer for a metal-supported electrochemical element includes a metal support and an electrode layer 2 formed on/over the metal support, and the electrode layer 2 has a region with a surface roughness (Ra) of 1.0 µm or less.

## Description

### Technical Field

The present invention relates to a substrate with an electrode layer for a metal-supported electrochemical element, the substrate having a metal support and an electrode layer, and the like.

### Background Art

A conventional metal-supported solid oxide fuel cell (SOFC) is obtained by forming an anode electrode layer on/over a porous metal support obtained by sintering Fe-Cr based alloy powder, and forming an electrolyte layer on/over the anode electrode layer.

### Prior Art Documents

### Non-Patent Document

Non-Patent Document 1: Jong-Jin Choi and Dong-Soo Park, "Preparation of Metal-supported SOFC using Low Temperature Ceramic Coating Process", Proceedings of 11th European SOFC & SOE Forum, A1502, Chapter 09 - Session B15 - 14/117- 20/117 (1-4 July 2014)

### Disclosure of the Invention

### Problem to be Solved by the Invention

However, as disclosed in Non-Patent Document 1, it is necessary to prepare an anode electrode layer subjected to heating treatment at a high temperature of 1300°C in order to form a zirconia-based electrolyte in a low temperature range. Accordingly, damage to the metal support is unavoidable, and it is necessary to provide, through heating treatment at 1200°C, an expensive LST (LaSrTiO₃) diffusion preventing layer for preventing elements that poison a cell from diffusing from the metal support, and this poses problems of reliability, durability, and cost.

The present invention was achieved in light of the foregoing problems, and an object of the present invention is to provide a low-cost electrochemical element that has excellent performance, reliability, and durability.

### Means for Solving Problem

A characteristic configuration of a substrate with an electrode layer for a metal-supported electrochemical element for achieving the object includes a metal support, and an electrode layer formed on/over the metal support, wherein the electrode layer has a region with a surface roughness (Ra) of 1.0 µm or less.

With the above-mentioned characteristic configuration, the electrode layer is suitable for an electrolyte layer formation process performed in a low temperature range, thus making it possible to form an electrochemical element including an electrode layer and an electrolyte layer on/over a metal support without providing an expensive LST diffusion preventing layer. When the surface of the electrode layer is highly smooth, the electrolyte layer can be kept uniform even if the electrolyte layer is constituted by a thin film, thus making it possible to configure an electrochemical element that has excellent performance, reliability, and durability. Also, when the surface of the electrode layer is highly smooth (the surface of the electrode layer has low unevenness), it is possible to configure an electrochemical element that has excellent performance, reliability, and durability as well as good adhesion between the electrode layer and the electrolyte layer due to few spaces being formed therebetween. It should be noted that the above-mentioned electrode layer more preferably has a region with a surface roughness (Ra) of 0.5 µm or less, and even more preferably 0.3 µm or less. The reason for this is that the smoother the surface of the electrode layer is, the greater the above-described effects are.

A characteristic configuration of a substrate with an electrode layer for a metal-supported electrochemical element for achieving the object includes a metal support, an electrode layer formed on/over the metal support, and an intermediate layer formed on/over the electrode layer, wherein the intermediate layer has a region with a surface roughness (Ra) of 1.0 µm or less.

With the above-mentioned characteristic configuration, the intermediate layer is suitable for an electrolyte layer formation process performed in a low temperature range, thus making it possible to form an electrochemical element including an electrode layer, an intermediate layer, and an electrolyte layer on/over a metal support without providing an expensive LST diffusion preventing layer. When the surface of the intermediate layer is highly smooth, the electrolyte layer can be kept uniform even if the electrolyte layer is constituted by a thin film, thus making it possible to configure an electrochemical element that has excellent performance, reliability, and durability. Also, when the surface of the intermediate layer is highly smooth (the surface of the intermediate layer has low unevenness), it is possible to configure an electrochemical element that has excellent performance, reliability, and durability as well as good adhesion between the intermediate layer and the electrolyte layer due to few spaces being formed therebetween. It should be noted that the above-mentioned intermediate layer more preferably has a region with a surface roughness (Ra) of 0.5 µm or less, and even more preferably 0.3 µm or less. The reason for this is that the smoother the surface of the intermediate layer is, the greater the above-described effects are.

In another characteristic configuration of the substrate with an electrode layer for a metal-supported electrochemical element according to the present invention, the electrode layer is formed on/over one surface of the metal support, and the metal support is provided with a through hole that penetrates the metal support from one surface to the other surface.

With the above-mentioned characteristic configuration, the gas or the like that reacts in the electrode layer can be smoothly supplied from the other side of the metal support, thus making it possible to realize a high-performance electrochemical element.

In yet another characteristic configuration of the substrate with an electrode layer for a metal-supported electrochemical element according to the present invention, the metal support is a metal plate subjected to hole formation processing.

With the above-mentioned characteristic configuration, the gas or the like that reacts in the electrode layer can be smoothly supplied from the other side of the metal support due to the hole formed through the hole formation processing, thus making it possible to realize the high-performance electrochemical element. In addition, the metal support provided with a through hole can be easily manufactured, and the above-mentioned characteristic configuration is thus favorable. Furthermore, using a metal plate as the substrate makes it possible to realize an electrochemical element that has excellent reliability and durability as well as high strength.

An electrochemical element including the above-described substrate with an electrode layer for a metal-supported electrochemical element, a counter electrode layer, and an electrolyte layer arranged between the electrode layer and the counter electrode layer is a low-cost electrochemical element that has excellent reliability and durability and is thus favorable.

In a characteristic configuration of an electrochemical module according to the present invention, a plurality of the above-described electrochemical elements are arranged in a stacked state.

With the above-mentioned characteristic configuration, the plurality of the above-described electrochemical elements are arranged in a stacked state, thus making it possible to obtain an electrochemical module that is compact, has high performance, and has excellent strength and reliability, while also suppressing material cost and processing cost.

A characteristic configuration of an electrochemical device according to the present invention includes at least the above-described electrochemical module and a reformer ,and includes a fuel supply unit which supplies fuel gas containing a reducible component to the electrochemical module, and an inverter that extracts electrical power from the electrochemical module.

The above-mentioned characteristic configuration includes the electrochemical module and the reformer ,and the fuel supply unit which supplies the fuel gas containing a reducible component to the electrochemical module, and the inverter that extracts electrical power from the electrochemical module, thus making it possible to use an existing raw fuel supply infrastructure such as city gas, to extract electrical power from the electrochemical module that has excellent durability, reliability, and performance, and making it possible to realize an electrochemical device that has excellent durability, reliability, and performance. Also, it is easier to construct a system that recycles unused fuel gas discharged from the electrochemical module, thus making it possible to realize a highly efficient electrochemical device.

A characteristic configuration of an energy system according to the present invention includes the above-described electrochemical device, and a waste heat management unit that reuses heat discharged from the electrochemical device.

The above-mentioned characteristic configuration includes the electrochemical device and the waste heat management unit that reuses heat discharged from the electrochemical device, thus making it possible to realize an energy system that has excellent durability, reliability, and performance as well as excellent energy efficiency. It should be noted that it is also possible to realize a hybrid system that has excellent energy efficiency by combination with a power generation system that generates power with use of combustion heat from unused fuel gas discharged from the electrochemical device.

A characteristic configuration of a solid oxide fuel cell according to the present invention includes the above-described electrochemical element, wherein a power generation reaction is caused in the electrochemical element at a temperature between 600°C and 850°C inclusive during a rated operation.

With the above-mentioned characteristic configuration, the power generation reaction is caused at a temperature between 600°C and 850°C inclusive during the rated operation, thus making it possible to suppress deterioration of the metal-supported electrochemical element and maintain the performance of the fuel cell for a long period of time while high power generation performance is exhibited. It should be noted that it is more preferable to configure a solid oxide fuel cell such that it can be operated in a temperature range between 650°C and 800°C inclusive during the rated operation because a fuel cell system that uses hydrocarbon-based raw fuel such as city gas can be constructed such that waste heat discharged from a fuel cell can be used in place of heat required to convert raw fuel to hydrogen, and the power generation efficiency of the fuel cell system can thus be improved.

A characteristic configuration of a manufacturing method according to the present invention is a manufacturing method for a substrate with an electrode layer for a metal-supported electrochemical element, the substrate including a metal support and an electrode layer formed on/over the metal support, the manufacturing method including an electrode layer smoothing step of smoothing the electrode layer.

With the above-mentioned characteristic configuration, the region with a surface roughness (Ra) of 1.0 µm or less is formed on/over the electrode layer through the electrode layer smoothing step. Therefore, with the above-mentioned characteristic configuration, the electrode layer is suitable for an electrolyte layer formation process performed in a low temperature range, thus making it possible to form an electrochemical element including an electrode layer and an electrolyte layer on/over a metal support without providing an expensive LST diffusion preventing layer. When the surface of the electrode layer is highly smooth, the electrolyte layer can be kept uniform even if the electrolyte layer is constituted by a thin film, thus making it possible to form an electrochemical element that has excellent performance, reliability, and durability. Also, when the surface of the electrode layer is highly smooth (the surface of the electrode layer has low unevenness), it is possible to form an electrochemical element that has excellent performance, reliability, and durability as well as good adhesion between the electrode layer and the electrolyte layer due to few spaces being formed therebetween. It should be noted that the above-mentioned electrode layer more preferably has a region with a surface roughness (Ra) of 0.5 µm or less, and even more preferably 0.3 µm or less. The reason for this is that the smoother the surface of the electrode layer is, the greater the above-described effects of the formed electrochemical element are.

Another characteristic configuration of the manufacturing method according to the present invention includes an electrode layer heating step of performing heating of the electrode layer at a temperature of 1100°C or lower.

With the above-mentioned characteristic configuration, the heating of the electrode layer is performed at a temperature of 1100°C or lower, thus making it possible to form the electrode layer on/over the metal support without exposing the metal support to high temperatures. Therefore, it is possible to form an electrochemical element that has excellent performance, reliability, and durability, and in which deterioration of the metal support is suppressed and diffusion of elements that poison the constituent elements of the electrochemical element, such as the electrode layer and the electrolyte layer, from the metal support is suppressed. Moreover, the heating can be performed at lower temperatures compared with conventional cases, thus making it possible to reduce manufacturing cost. Furthermore, the electrochemical element including the electrode layer and the electrolyte layer on/over the metal support can be formed without providing an expensive LST diffusion preventing layer between the metal support and the electrode layer, thus making it possible to form an electrochemical element that has excellent performance and to reduce manufacturing cost. It should be noted that the heating of the electrode layer is preferably performed at a temperature of 1050°C or lower, and more preferably 1000°C or lower. The reason for this is that the lower the heating temperature of the electrode layer is, the more likely it is to suppress damage to and deterioration of the metal substrate when forming the electrochemical element. It is preferable to perform the heating of the electrode layer at a temperature of 800°C or higher because the strength of the electrode layer can be ensured.

In yet another characteristic configuration of the manufacturing method according to the present invention, compression shape forming is performed as the electrode layer smoothing step.

With the above-mentioned characteristic configuration, the region with a surface roughness (Ra) of 1.0 µm or less is formed on/over the electrode layer through the simple compression shape forming performed as the electrode layer smoothing step. Therefore, with the above-mentioned characteristic configuration, the electrode layer is suitable for an electrolyte layer formation process performed in a low temperature range, thus making it possible to form an electrochemical element including an electrode layer and an electrolyte layer on/over a metal support without providing an expensive LST diffusion preventing layer. When the surface of the electrode layer is highly smooth, the electrolyte layer can be kept uniform even if the electrolyte layer is constituted by a thin film, thus making it possible to form an electrochemical element that has excellent performance, reliability, and durability. Also, when the surface of the electrode layer is highly smooth (the surface of the electrode layer has low unevenness), it is possible to form an electrochemical element that has excellent performance, reliability, and durability as well as good adhesion between the electrode layer and the electrolyte layer due to few spaces being formed therebetween. It is also possible to reduce manufacturing cost.

A characteristic configuration of a manufacturing method according to the present invention is a manufacturing method for a substrate with an electrode layer for a metal-supported electrochemical element, the substrate including a metal support, an electrode layer formed on/over the metal support, and an intermediate layer formed on/over the electrode layer, the manufacturing method including an intermediate layer smoothing step of smoothing the intermediate layer.

With the above-mentioned characteristic configuration, the region with a surface roughness (Ra) of 1.0 µm or less is formed on/over the intermediate layer through the intermediate layer smoothing step. Therefore, with the above-mentioned characteristic configuration, the intermediate layer is suitable for an electrolyte layer formation process performed in a low temperature range, thus making it possible to form an electrochemical element including an electrode layer, an intermediate layer, and an electrolyte layer on/over a metal support without providing an expensive LST diffusion preventing layer. When the surface of the intermediate layer is highly smooth, the electrolyte layer can be kept uniform even if the electrolyte layer is constituted by a thin film, thus making it possible to form an electrochemical element that has excellent performance, reliability, and durability. Also, when the surface of the intermediate layer is highly smooth (the surface of the intermediate layer has low unevenness), it is possible to form an electrochemical element that has excellent performance, reliability, and durability as well as good adhesion between the intermediate layer and the electrolyte layer due to few spaces being formed therebetween. It should be noted that the above-mentioned intermediate layer more preferably has a region with a surface roughness (Ra) of 0.5 µm or less, and even more preferably 0.3 µm or less. The reason for this is that the smoother the surface of the intermediate layer is, the greater the above-described effects of the formed electrochemical element are.

Another characteristic configuration of the manufacturing method according to the present invention includes an intermediate layer heating step of performing heating of the intermediate layer at a temperature of 1100°C or lower.

With the above-mentioned characteristic configuration, the heating of the intermediate layer is performed at a temperature of 1100°C or lower, thus making it possible to form the intermediate layer on/over the metal support without exposing the metal support to high temperatures. Therefore, it is possible to form an electrochemical element that has excellent performance, reliability, and durability, and in which deterioration of the metal support is suppressed and diffusion of elements that poison the constituent elements of the electrochemical element, such as the electrode layer and the electrolyte layer, from the metal support is suppressed. Moreover, the heating can be performed at lower temperatures compared with conventional cases, thus making it possible to reduce manufacturing cost. Furthermore, the electrochemical element including the electrode layer, the intermediate layer, and the electrolyte layer on/over the metal support can be formed without providing an expensive LST diffusion preventing layer between the metal support and the electrode layer or the intermediate layer, thus making it possible to form an electrochemical element that has excellent performance and to reduce manufacturing cost. It should be noted that the heating of the intermediate layer is preferably performed at a temperature of 1050°C or lower, and more preferably 1000°C or lower. The reason for this is that the lower the heating temperature of the electrode layer is, the more likely it is to suppress damage to and deterioration of the metal substrate when forming the electrochemical element. It is preferable to perform the heating of the intermediate layer at a temperature of 800°C or higher because the strength of the intermediate layer can be ensured.

In yet another characteristic configuration of the manufacturing method according to the present invention, compression shape forming is performed as the intermediate layer smoothing step.

With the above-mentioned characteristic configuration, the region with a surface roughness (Ra) of 1.0 µm or less is formed on/over the intermediate layer through the simple compression shape forming performed as the intermediate layer smoothing step. Therefore, with the above-mentioned characteristic configuration, the intermediate layer is suitable for an electrolyte layer formation process performed in a low temperature range, thus making it possible to form an electrochemical element including an electrode layer, an intermediate layer, and an electrolyte layer on/over a metal support without providing an expensive LST diffusion preventing layer. When the surface of the intermediate layer is highly smooth, the electrolyte layer can be kept uniform even if the electrolyte layer is constituted by a thin film, thus making it possible to form an electrochemical element that intermediate layer has excellent performance, reliability, and durability. Also, when the surface of the intermediate layer is highly smooth (the surface of the intermediate layer has low unevenness), it is possible to form an electrochemical element that has excellent performance, reliability, and durability as well as good adhesion between the intermediate layer and the electrolyte layer due to few spaces being formed therebetween. It is also possible to reduce manufacturing cost.

### Brief Description of the Drawings

FIG. 1 is a schematic diagram showing a configuration of an electrochemical element.
FIG. 2 is a schematic diagram showing configurations of electrochemical elements and an electrochemical module.
FIG. 3 is a schematic diagram showing configurations of an electrochemical device and an energy system.
FIG. 4 is a schematic diagram showing a configuration of an electrochemical module.
FIG. 5 is an electron micrograph of a cross section of the electrochemical element.

### Best Modes for Carrying out the Invention

### First Embodiment

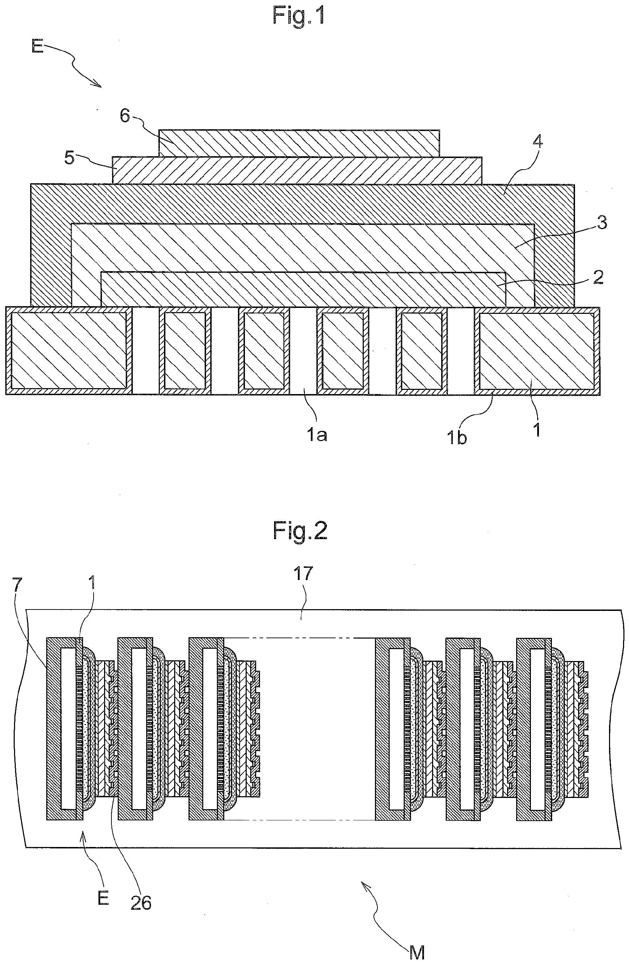

Hereinafter, an electrochemical element E and a solid oxide fuel cell (SOFC) according to this embodiment will be described with reference to FIG. 1. The electrochemical element E is used as a constituent element of a solid oxide fuel cell that receives a supply of air and fuel gas containing hydrogen and generates power, for example. It should be noted that when the positional relationship between layers and the like are described in the description below, a counter electrode layer 6 side may be referred to as "upper portion" or "upper side", and an electrode layer 2 side may be referred to as "lower portion" or "lower side", with respect to an electrolyte layer 4, for example. In addition, in a metal substrate 1, a surface on/over which the electrode layer 2 is formed may be referred to as "front side", and a surface on/over an opposite side may be referred to as "back side".

### Electrochemical Element

As shown in FIG. 1, the electrochemical element E includes a metal substrate 1 (metal support), an electrode layer 2 formed on/over the metal substrate 1, an intermediate layer 3 formed on/over the electrode layer 2, and an electrolyte layer 4 formed on/over the intermediate layer 3. The electrochemical element E further includes a reaction preventing layer 5 formed on/over the electrolyte layer 4, and a counter electrode layer 6 formed on/over the reaction preventing layer 5. Specifically, the counter electrode layer 6 is formed above the electrolyte layer 4, and the reaction preventing layer 5 is formed between the electrolyte layer 4 and the counter electrode layer 6. The electrode layer 2 is porous, and the electrolyte layer 4 is dense.

### Substrate with Electrode Layer

In this embodiment, a substrate with an electrode layer B for a metal-supported electrochemical element is configured to include the metal substrate 1 (metal support), the electrode layer 2 formed on/over the metal substrate 1, and the intermediate layer 3 formed on/over the electrode layer 2. That is, in this embodiment, the electrochemical element E is configured to include the substrate with an electrode layer B, the electrolyte layer 4, the reaction preventing layer 5, and the counter electrode layer 6.

### Metal Substrate

The metal substrate 1 plays a role as a support that supports the electrode layer 2, the intermediate layer 3, the electrolyte layer 4, and the like and maintains the strength of the electrochemical element E. A material that has excellent electron conductivity, thermal resistance, oxidation resistance, and corrosion resistance is used as the material for forming the metal substrate 1. Examples thereof include ferrite-based stainless steel, austenite-based stainless steel, and nickel-based alloys. In particular, alloys containing chromium are favorably used. It should be noted that although a plate-shaped metal substrate 1 is used as the metal support in this embodiment, a metal support having another shape such as a box shape or cylindrical shape can also be used.

It should be noted that the metal substrate 1 need only have a strength sufficient for serving as the support for forming the electrochemical element, and can have a thickness of approximately 0.1 mm to 2 mm, preferably approximately 0.1 mm to 1 mm, and more preferably approximately 0.1 mm to 0.5 mm, for example.

The metal substrate 1 is provided with a plurality of through holes 1a that penetrate the surface on the front side and the surface on the back side. It should be noted that the through holes 1a can be provided in the metal substrate 1 through mechanical, chemical, or optical piercing processing, for example. The through holes 1a have a function of transmitting gas from the surface on the back side of the metal substrate 1 to the surface on the front side thereof. Porous metal can also be used to impart gas permeability to the metal substrate 1. A metal sintered body, a metal foam, or the like can also be used as the metal substrate 1, for example.

A metal oxide thin layer 1b serving as a diffusion suppressing layer is provided on/over the surfaces of the metal substrate 1. That is, the diffusion suppressing layer is formed between the metal substrate 1 and the electrode layer 2, which will be described later. The metal oxide thin layer 1b is provided not only on/over the surface of the metal substrate 1 exposed to the outside but also the surface (interface) that is in contact with the electrode layer 2 and the inner surfaces of the through holes 1a. Element interdiffusion that occurs between the metal substrate 1 and the electrode layer 2 can be suppressed due to this metal oxide thin layer 1b. For example, when ferrite-based stainless steel containing chromium is used in the metal substrate 1, the metal oxide thin layer 1b is mainly made of a chromium oxide. The metal oxide thin layer 1b containing the chromium oxide as the main component suppresses diffusion of chromium atoms and the like of the metal substrate 1 to the electrode layer 2 and the electrolyte layer 4. The metal oxide thin layer 1b need only have such a thickness that allows both high diffusion preventing performance and low electric resistance to be achieved. For example, it is preferable that the thickness is on the order of submicrons, and specifically, it is more preferable that the average thickness is approximately 0.3 µm or more and 0.7 µm or less. It is more preferable that the minimum thickness is about 0.1 µm or more.

Also, it is preferable that the maximum thickness is about 1.1 µm or less.

The metal oxide thin layer 1b can be formed using various techniques, but it is favorable to use a technique of oxidizing the surface of the metal substrate 1 to obtain a metal oxide. Also, the metal oxide thin layer 1b may be formed on/over the surface of the metal substrate 1 by using a PVD technique such as a sputtering technique or PLD technique, a CVD technique, or a spray coating technique (a technique such as thermal spraying technique, an aerosol deposition technique, an aerosol gas deposition technique, a powder jet deposition technique, a particle jet deposition technique, or a cold spraying technique), or may be formed by plating and oxidation treatment. Furthermore, the metal oxide thin layer 1b may also contain a spinel phase that has high electron conductivity, or the like.

When a ferrite-based stainless steel material is used to form the metal substrate 1, its thermal expansion coefficient is close to that of YSZ (yttria-stabilized zirconia), GDC (gadolinium-doped ceria; also called CGO), or the like, which is used as the material for forming the electrode layer 2 and the electrolyte layer 4. Accordingly, even if low and high temperature cycling is repeated, the electrochemical element E is not likely to be damaged. Therefore, this is preferable due to being able to realize an electrochemical element E that has excellent long-term durability.

### Electrode Layer

As shown in FIG. 1, the electrode layer 2 can be provided as a thin layer in a region that is larger than the region provided with the through holes 1a, on/over the front surface of the metal substrate 1. When it is provided as a thin layer, the thickness can be set to approximately 1 µm to 100 µm, and preferably 5 µm to 50 µm, for example. This thickness makes it possible to ensure sufficient electrode performance while also achieving cost reduction by reducing the used amount of expensive electrode layer material. The region provided with the through holes 1a is entirely covered with the electrode layer 2. That is, the through holes 1a are formed inside the region of the metal substrate 1 in which the electrode layer 2 is formed. In other words, all the through holes 1a are provided facing the electrode layer 2.

A composite material such as NiO-GDC, Ni-GDC, NiO-YSZ, Ni-YSZ, CuO-CeO₂, or Cu-CeO₂ can be used as the material for forming the electrode layer 2, for example. In these examples, GDC, YSZ, and CeO₂ can be called the aggregate of the composite material. It should be noted that it is preferable to form the electrode layer 2 using low-temperature heating (not performing heating treatment in a high temperature range of higher than 1100°C, but rather performing a wet process using heating treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these processes that can be used in a low temperature range, a favorable electrode layer 2 is obtained without using heating in a high temperature range of higher than 1100°C, for example. Therefore, this is preferable due to being able to prevent damage to the metal substrate 1, suppress element interdiffusion between the metal substrate 1 and the electrode layer 2, and realize an electrochemical element that has excellent durability. Furthermore, using low-temperature heating makes it possible to facilitate handling of raw materials and is thus more preferable.

The inside and the surface of the electrode layer 2 are provided with a plurality of pores in order to impart gas permeability to the electrode layer 2.

That is, the electrode layer 2 is formed as a porous layer. The electrode layer 2 is formed to have a denseness of 30% or more and less than 80%, for example. Regarding the size of the pores, a size suitable for smooth progress of an electrochemical reaction can be selected as appropriate. It should be noted that the "denseness" is a ratio of the material of the layer to the space and can be represented by a formula "1 - porosity", and is equivalent to relative density.

### Intermediate Layer

As shown in FIG. 1, the intermediate layer 3 can be formed as a thin layer on/over the electrode layer 2 so as to cover the electrode layer 2. When it is formed as a thin layer, the thickness can be set to approximately 1 µm to 100 µm, preferably approximately 2 µm to 50 µm, and more preferably approximately 4 µm to 25 µm, for example. This thickness makes it possible to ensure sufficient performance while also achieving cost reduction by reducing the used amount of expensive intermediate layer material. YSZ (yttria-stabilized zirconia), SSZ (scandium-stabilized zirconia), GDC (gadolinium-doped ceria), YDC (yttrium-doped ceria), SDC (samarium-doped ceria), or the like can be used as the material for forming the intermediate layer 3. In particular, ceria-based ceramics are favorably used.

It is preferable to form the intermediate layer 3 using low-temperature heating (not performing heating treatment in a high temperature range of higher than 1100°C, but rather performing a wet process using heating treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these film formation processes that can be used in a low temperature range, an intermediate layer 3 is obtained without using heating in a high temperature range of higher than 1100°C, for example. Therefore, it is possible to prevent damage to the metal substrate 1, suppress element interdiffusion between the metal substrate 1 and the electrode layer 2, and realize an electrochemical element E that has excellent durability. Furthermore, using low-temperature heating makes it possible to facilitate handling of raw materials and is thus more preferable.

It is preferable that the intermediate layer 3 has oxygen ion (oxide ion) conductivity. It is more preferable that the intermediate layer 3 has both oxygen ion (oxide ion) conductivity and electron conductivity, namely mixed conductivity. The intermediate layer 3 that has these properties is suitable for application to the electrochemical element E.

### Surface Roughness (Ra) of Intermediate Layer

In this embodiment, the intermediate layer 3 has a region with a surface roughness (Ra) of 1.0 µm or less. This region may correspond to all or a part of the surface of the intermediate layer 3. An electrochemical element E that has excellent performance, reliability, and durability as well as good adhesion between the intermediate layer 3 and the electrolyte layer 4 can be configured due to the intermediate layer 3 having a region with a surface roughness (Ra) of 1.0 µm or less. Moreover, the electrolyte layer 4 can be kept uniform even if the electrolyte layer 4 is constituted by a thin film, thus making it possible to configure an electrochemical element that has excellent performance, reliability, and durability. It should be noted that the intermediate layer 3 more preferably has a region with a surface roughness (Ra) of 0.5 µm or less, and even more preferably 0.3 µm or less. The reason for this is that an electrochemical element E that is excellent in the above-described effects can be formed if the intermediate layer 3 is smoother in terms of the surface roughness.

### Electrolyte Layer

As shown in FIG. 1, the electrolyte layer 4 is formed as a thin layer on/over the intermediate layer 3 so as to cover the electrode layer 2 and the intermediate layer 3. The electrolyte layer 4 can also be formed as a thin film having a thickness of 10 µm or less. Specifically, as shown in FIG. 1, the electrolyte layer 4 is provided on/over both the intermediate layer 3 and the metal substrate 1 (spanning the intermediate layer 3 and the metal substrate 1). Configuring the electrolyte layer 4 in this manner and joining the electrolyte layer 4 to the metal substrate 1 make it possible to allow the electrochemical element to have excellent toughness as a whole.

Also, as shown in FIG. 1, the electrolyte layer 4 is provided in a region that is larger than the region provided with the through holes 1a, on/over the front surface of the metal substrate 1. That is, the through holes 1a are formed inside the region of the metal substrate 1 in which the electrolyte layer 4 is formed.

The leakage of gas from the electrode layer 2 and the intermediate layer 3 can be suppressed in the vicinity of the electrolyte layer 4. A description of this will be given. When the electrochemical element E is used as a constituent element of a SOFC, gas is supplied from the back side of the metal substrate 1 through the through holes 1a to the electrode layer 2 during the operation of the SOFC. In a region where the electrolyte layer 4 is in contact with the metal substrate 1, leakage of gas can be suppressed without providing another member such as a gasket. It should be noted that although the entire vicinity of the electrode layer 2 is covered with the electrolyte layer 4 in this embodiment, a configuration in which the electrolyte layer 4 is provided on/over the electrode layer 2 and the intermediate layer 3 and a gasket or the like is provided in its vicinity may also be adopted.

YSZ (yttria-stabilized zirconia), SSZ (scandium-stabilized zirconia), GDC (gadolinium-doped ceria), YDC (yttrium-doped ceria), SDC (samarium-doped ceria), LSGM (strontium- and magnesium-doped lanthanum gallate), or the like can be used as the material for forming the electrolyte layer 4. In particular, zirconia-based ceramics are favorably used. Using zirconia-based ceramics for the electrolyte layer 4 makes it possible to increase the operation temperature of the SOFC in which the electrochemical element E is used compared with the case where ceria-based ceramics are used. For example, when the electrochemical element E is used in the SOFC, by adopting a system configuration in which a material such as YSZ that can exhibit high electrolyte performance even in a high temperature range of approximately 650°C or higher is used as the material for forming the electrolyte layer 4, a hydrocarbon-based raw fuel material such as city gas or LPG is used as the raw fuel for the system, and the raw fuel material is reformed into anode gas of the SOFC through steam reforming or the like, it is thus possible to construct a high-efficiency SOFC system in which heat generated in a cell stack of the SOFC is used to reform raw fuel gas.

It is preferable to form the electrolyte layer 4 using low-temperature heating (not performing heating treatment in a high temperature range of higher than 1100°C, but rather performing a wet process using heating treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these film formation processes that can be used in a low temperature range, an electrolyte layer 4 that is dense and has high gas-tightness and gas barrier properties is obtained without using heating in a high temperature range of higher than 1100°C, for example. Therefore, it is possible to prevent damage to the metal substrate 1, suppress element interdiffusion between the metal substrate 1 and the electrode layer 2, and realize an electrochemical element E that has excellent performance and durability. In particular, using low-temperature heating, a spray coating technique, or the like makes it possible to realize a low-cost element and is thus preferable. Furthermore, using a spray coating technique makes it easy to obtain, in a low temperature range, an electrolyte layer that is dense and has high gas-tightness and gas barrier properties, and is thus more preferable.

The electrolyte layer 4 is given a dense configuration in order to block gas leakage of anode gas and cathode gas and exhibit high ion conductivity. The electrolyte layer 4 preferably has a denseness of 90% or more, more preferably 95% or more, and even more preferably 98% or more. When the electrolyte layer 4 is formed as a uniform layer, the denseness is preferably 95% or more, and more preferably 98% or more. When the electrolyte layer 4 has a multilayer configuration, at least a portion thereof preferably includes a layer (dense electrolyte layer) having a denseness of 98% or more, and more preferably a layer (dense electrolyte layer) having a denseness of 99% or more. The reason for this is that an electrolyte layer that is dense and has high gas tightness and gas barrier properties can be easily formed due to such a dense electrolyte layer being included as a portion of the electrolyte layer even when the electrolyte layer has a multilayer configuration.

### Reaction Preventing Layer

The reaction preventing layer 5 can be formed as a thin layer on/over the electrolyte layer 4. When it is formed as a thin layer, the thickness can be set to approximately 1 µm to 100 µm, preferably approximately 2 µm to 50 µm, and more preferably approximately 4 µm to 25 µm, for example. This thickness makes it possible to ensure sufficient performance while also achieving cost reduction by reducing the used amount of expensive reaction preventing layer material. The material for forming the reaction preventing layer 5 need only be capable of preventing reactions between the component of the electrolyte layer 4 and the component of the counter electrode layer 6. For example, a ceria-based material or the like is used. Introducing the reaction preventing layer 5 between the electrolyte layer 4 and the counter electrode layer 6 effectively suppresses reactions between the material constituting the counter electrode layer 6 and the material constituting the electrolyte layer 4 and makes it possible to improve long-term stability in the performance of the electrochemical element E. Forming the reaction preventing layer 5 using, as appropriate, a method through which the reaction preventing layer 5 can be formed at a treatment temperature of 1100°C or lower makes it possible to suppress damage to the metal substrate 1, suppress element interdiffusion between the metal substrate 1 and the electrode layer 2, and realize an electrochemical element E that has excellent performance and durability, and is thus preferable. For example, the reaction preventing layer 5 can be formed using, as appropriate, low-temperature heating (not performing heating treatment in a high temperature range of higher than 1100°C, but rather performing a wet process using heating treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. In particular, using low-temperature heating, a spray coating technique, or the like makes it possible to realize a low-cost element and is thus preferable. Furthermore, using low-temperature heating makes it possible to facilitate handling of raw materials and is thus more preferable.

### Counter Electrode Layer

The counter electrode layer 6 can be formed as a thin layer on/over the electrolyte layer 4 or the reaction preventing layer 5. When it is formed as a thin layer, the thickness can be set to approximately 1 µm to 100 µm, and preferably approximately 5 µm to 50 µm, for example. This thickness makes it possible to ensure sufficient electrode performance while also achieving cost reduction by reducing the used amount of expensive counter electrode layer material. A complex oxide such as LSCF or LSM can be used as the material for forming the counter electrode layer 6, for example. The counter electrode layer 6 constituted by the above-mentioned material functions as a cathode.

It should be noted that forming the counter electrode layer 6 using, as appropriate, a method through which the counter electrode layer 6 can be formed at a treatment temperature of 1100°C or lower makes it possible to suppress damage to the metal substrate 1, suppress element interdiffusion between the metal substrate 1 and the electrode layer 2, and realize an electrochemical element E that has excellent performance and durability, and is thus preferable. For example, the counter electrode layer 6 can be formed using, as appropriate, low-temperature heating (not performing heating treatment in a high temperature range of higher than 1100°C, but rather performing a wet process using heating treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. In particular, using low-temperature heating, a spray coating technique, or the like makes it possible to realize a low-cost element and is thus preferable. Furthermore, using low-temperature heating makes it possible to facilitate handling of raw materials and is thus more preferable.

### Solid Oxide Fuel Cell

The electrochemical element E configured as described above can be used as a power generating cell for a solid oxide fuel cell. For example, fuel gas containing hydrogen is supplied from the back surface of the metal substrate 1 through the through holes 1a to the electrode layer 2, air is supplied to the counter electrode layer 6 serving as a counter electrode of the electrode layer 2, and the operation is performed at a temperature of 600°C or higher and 850°C or lower, for example. Accordingly, the oxygen O₂ included in air reacts with electrons e⁻ in the counter electrode layer 6, thus producing oxygen ions O²⁻. The oxygen ions O²⁻ move through the electrolyte layer 4 to the electrode layer 2. In the electrode layer 2, the hydrogen H₂ included in the supplied fuel gas reacts with the oxygen ions O²⁻, thus producing water H₂O and electrons e⁻. With these reactions, electromotive force is generated between the electrode layer 2 and the counter electrode layer 6. In this case, the electrode layer 2 functions as a fuel electrode (anode) of the SOFC, and the counter electrode layer 6 functions as an air electrode (cathode).

### Manufacturing Method for Electrochemical Element

Next, a manufacturing method for the electrochemical element E according to this embodiment will be described.

### Electrode Layer Forming Step

In an electrode layer forming step, the electrode layer 2 is formed as a thin film in a region that is broader than the region provided with the through holes 1a, on/over the front surface of the metal substrate 1. The through holes of the metal substrate 1 can be provided through laser processing or the like. As described above, the electrode layer 2 can be formed using low-temperature heating (a wet process using heating treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal substrate 1.

The following is an example of the case where low-temperature heating is performed as the electrode layer forming step. First, a material paste is produced by mixing powder of the material for forming the electrode layer 2 and a solvent (dispersion medium), and is applied to the front surface of the metal substrate 1. Then, the electrode layer 2 is obtained through compression shape forming (electrode layer smoothing step) and heating at a temperature of 1100°C or lower (electrode layer heating step). Examples of compression shape forming of the electrode layer 2 include CIP (Cold Isostatic Pressing) shape forming, roll pressing shape forming, and RIP (Rubber Isostatic Pressing) shape forming. It is favorable to perform heating of the electrode layer 2 at a temperature of 800°C or higher and 1100°C or lower. The order in which the electrode layer smoothing step and the electrode layer heating step are performed can be changed.

It should be noted that, when an electrochemical element including an intermediate layer is formed, the electrode layer smoothing step and the electrode layer heating step may be omitted, and an intermediate layer smoothing step and an intermediate layer heating step, which will be described later, may include the electrode layer smoothing step and the electrode layer heating step.

It should be noted that lapping shape forming, leveling treatment, surface cutting treatment, surface polishing treatment, or the like can also be performed as the electrode layer smoothing step.

### Diffusion Suppressing Layer Forming Step

The metal oxide thin layer 1b (diffusion suppressing layer) is formed on the surface of the metal substrate 1 during the heating step in the above-described electrode layer forming step. It should be noted that it is preferable that the above-mentioned heating step includes a heating step in which the heating atmosphere satisfies the atmospheric condition that the oxygen partial pressure is low because a high-quality metal oxide thin layer 1b (diffusion suppressing layer) that has a high element interdiffusion suppressing effect and has a low resistance value is formed. In a case where a coating method that does not include heating is performed as the electrode layer forming step, for example, a separate diffusion suppressing layer forming step may also be included. In any case, it is desirable to perform these steps at a temperature of 1100°C or lower such that damage to the metal substrate 1 can be suppressed. The metal oxide thin layer 1b (diffusion suppressing layer) may be formed on/over the surface of the metal substrate 1 during the heating step in an intermediate layer forming step, which will be described later.

### Intermediate Layer Forming Step

In an intermediate layer forming step, the intermediate layer 3 is formed as a thin layer on/over the electrode layer 2 so as to cover the electrode layer 2. As described above, the intermediate layer 3 can be formed using low-temperature heating (a wet process using heating treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal substrate 1.

The following is an example of the case where low-temperature heating is performed as the intermediate layer forming step. First, a material paste is produced by mixing powder of the material for forming the intermediate layer 3 and a solvent (dispersion medium), and is applied to the front surface of the metal substrate 1. Then, the intermediate layer 3 is obtained through compression shape forming (intermediate layer smoothing step) and heating at a temperature of 1100°C or lower (intermediate layer heating step). Examples of rolling of the intermediate layer 3 include CIP (Cold Isostatic Pressing) shape forming, roll pressing shape forming, and RIP (Rubber Isostatic Pressing) shape forming. It is favorable to perform heating of the intermediate layer at a temperature of 800°C or higher and 1100°C or lower. The reason for this is that this temperature makes it possible to form an intermediate layer 3 that has high strength while suppressing damage to and deterioration of the metal substrate 1. It is more preferable to perform heating of the intermediate layer 3 at a temperature of 1050°C or lower, and more preferably 1000°C or lower. The reason for this is that the lower the heating temperature of the intermediate layer 3 is, the more likely it is to further suppress damage to and deterioration of the metal substrate 1 when forming the electrochemical element E. The order in which the intermediate layer smoothing step and the intermediate layer heating step are performed can be changed.

It should be noted that lapping shape forming, leveling treatment, surface cutting treatment, surface polishing treatment, or the like can also be performed as the intermediate layer smoothing step.

### Electrolyte Layer Forming Step

In an electrolyte layer forming step, the electrolyte layer 4 is formed as a thin layer on/over the intermediate layer 3 so as to cover the electrode layer 2 and the intermediate layer 3. The electrolyte layer 4 may also be formed as a thin film having a thickness of 10 µm or less. As described above, the electrolyte layer 4 can be formed using low-temperature heating (a wet process using heating treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal substrate 1.

It is desirable to perform a spray coating technique as the electrolyte layer forming step in order to form a high-quality electrolyte layer 4 that is dense and has high gas-tightness and gas barrier properties in a temperature range of 1100°C or lower. In this case, the material for forming the electrolyte layer 4 is sprayed onto the intermediate layer 3 on/over the metal substrate 1, and the electrolyte layer 4 is thus formed.

### Reaction Preventing Layer Forming Step

In a reaction preventing layer forming step, the reaction preventing layer 5 is formed as a thin layer on/over the electrolyte layer 4. As described above, the reaction preventing layer 5 can be formed using low-temperature heating, a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal substrate 1. It should be noted that leveling treatment, surface cutting treatment, or surface polishing treatment may be performed after the formation of the reaction preventing layer 5, or pressing processing may be performed after wet formation and before heating in order to flatten the upper surface of the reaction preventing layer 5.

### Counter Electrode Layer Forming Step

In a counter electrode layer forming step, the counter electrode layer 6 is formed as a thin layer on the reaction preventing layer 5. As described above, the counter electrode layer 6 can be formed using low-temperature heating, a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal substrate 1.

In this manner, the electrochemical element E can be manufactured. It should be noted that the substrate with an electrode layer B for a metal-supported electrochemical element can be manufactured by performing the above-described electrode layer forming step and intermediate layer forming step. That is, the manufacturing method according to this embodiment is a method for manufacturing a substrate with an electrode layer B for a metal-supported electrochemical element, the substrate including a metal substrate 1 (metal support), an electrode layer 2 formed on/over the metal substrate 1, and an intermediate layer 3 formed on/over the electrode layer 2, and the method includes an intermediate layer smoothing step of smoothing the surface of the intermediate layer 3 and an intermediate layer heating step of performing heating of the intermediate layer 3 at a temperature of 1100°C or lower.

It should be noted that a configuration in which the electrochemical element E does not include both or either of the intermediate layer 3 and the reaction preventing layer 5 is also possible. That is, a configuration in which the electrode layer 2 and the electrolyte layer 4 are in contact with each other, or a configuration in which the electrolyte layer 4 and the counter electrode layer 6 are in contact with each other is also possible. In this case, in the above-described manufacturing method, the intermediate layer forming step and the reaction preventing layer forming step are omitted. It should be noted that it is also possible to add a step of forming another layer or to form a plurality of layers of the same type one on/over top of another, but in any case, it is desirable to perform these steps at a temperature of 1100°C or lower.

### Examples

A metal substrate 1 was produced by providing a plurality of through holes 1a through laser processing in a region with a radius of 2.5 mm from the center of a crofer 22 APU metal plate having a circular shape with a thickness of 0.3 mm and a diameter of 25 mm. It should be noted that, at this time, the through holes 1a on the surface of the metal substrate 1 were provided through laser processing.

Next, a paste was produced by mixing 60 wt% of NiO powder and 40 wt% of GDC powder and adding an organic binder and an organic solvent (dispersion medium) thereto. The paste was used to form an electrode layer 2 on/over a region with a radius of 3 mm from the center of the metal substrate 1. It should be noted that the electrode layer 2 was formed using screen printing. Then, heating treatment was performed at 950°C on the metal substrate 1 on/over which the electrode layer 2 was formed (electrode layer forming step, diffusion suppressing layer forming step).

Next, a paste was produced by adding an organic binder and an organic solvent (dispersion medium) to fine powder of GDC. The paste was used to form an intermediate layer 3, using screen printing, on a region with a radius of 5 mm from the center of the metal substrate 1 on/over which the electrode layer 2 was formed. Next, the intermediate layer 3 having a flat surface was formed by performing CIP shape forming with a pressure of 300 MPa on the metal substrate 1 on/over which the intermediate layer 3 was formed and then performing heating treatment at 1000°C (intermediate layer forming step).

The electrode layer 2 and the intermediate layer 3 obtained through the above-described steps had a thickness of about 20 µm and about 10 µm, respectively. Moreover, the He leakage amount of metal substrate 1 on/over which the electrode layer 2 and the intermediate layer 3 were formed in this manner was 11.5 mL/minute·cm² under a pressure of 0.2 MPa. It was found from this result that the metal substrate 1 on/over which the electrode layer 2 and the intermediate layer 3 were formed could be considered as a substrate with an electrode layer having gas permeability.

Subsequently, an electrolyte layer 4 was formed by spraying an 8YSZ (yttria-stabilized zirconia) component with a mode diameter of about 0.7 µm onto a 15 mm × 15 mm region of the intermediate layer 3 of the metal substrate 1 at a supply speed of 4.1 g/minute so as to cover the intermediate layer 3 while the substrate was moved at a scanning speed of 5 mm/second (spray coating). It should be noted that, at this time, the metal substrate 1 was not heated (electrolyte layer forming step).

The electrolyte layer 4 obtained through the above-described step had a thickness of approximately 3 to 4 µm. The He leakage amount of the metal substrate 1 on/over which the electrode layer 2, the intermediate layer 3, and the electrolyte layer 4 were formed was measured under a pressure of 0.2 MPa. The determined He leakage amount was smaller than the lower detection limit (1.0 mL/minute·cm²). Accordingly, it was found that the formed electrolyte layer 4 had gas barrier properties.

Next, a paste was produced by adding an organic binder and an organic solvent (dispersion medium) to fine powder of GDC. The paste was used to form a reaction preventing layer 5 on/over the electrolyte layer 4 of the electrochemical element E using screen printing.

Thereafter, the reaction preventing layer 5 having a flat surface was formed by performing CIP shape forming with a pressure of 300 MPa on the electrochemical element E on/over which the reaction preventing layer 5 was formed and then performing heating treatment at 1000°C (reaction preventing layer forming step).

Furthermore, a paste was produced by mixing GDC powder and LSCF powder and adding an organic binder and an organic solvent (dispersion medium) thereto. The paste was used to form a counter electrode layer 6 on/over the reaction preventing layer 5 using screen printing. Lastly, a final electrochemical element E was obtained by heating, at 900°C, the electrochemical element E on/over which the counter electrode layer 6 was formed (counter electrode layer forming step).

Hydrogen gas and air were respectively supplied to the electrode layer 2 and the counter electrode layer 6, and the open circuit voltage (OCV) of the obtained electrochemical element E serving as a cell for a solid oxide fuel cell was measured. The result was 1.07 V at 750°C.

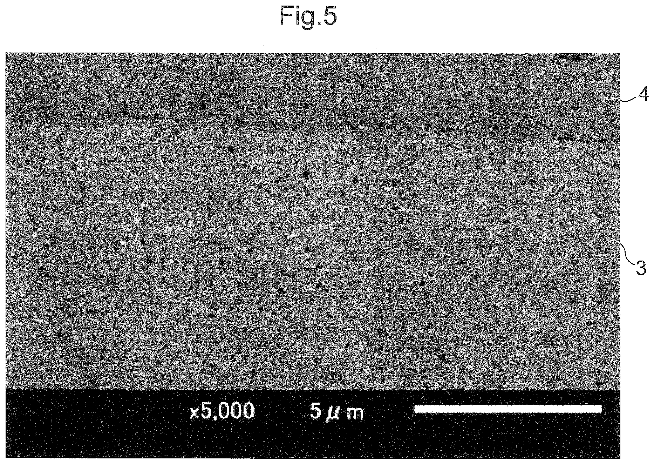

FIG. 5 shows an electron micrograph of a cross section of the electrochemical element E. As is clear from the electron micrograph, the dense electrolyte layer 4 was formed on/over the smooth surface with a surface roughness (Ra) of 1.0 µm or less of the intermediate layer 3 on the side facing the electrolyte layer, and it is thus clear that a cell for a solid oxide fuel cell (electrochemical element E) that had favorable performance was obtained.

Five samples were produced in the same manner, and the surface roughnesses (Ra) of the intermediate layers 3 of these samples were measured using a laser microscope. Table 1 shows the results.

**Table 1**

| | Surface roughness (Ra) of intermediate layer | |
|---|---|---|
| | Calculated value for 259-µm width | Calculated value for 642-µm width |
| Sample 1 | 0.064 µm to 0.104 µm | 0.139 µm to 0.196 µm |
| Sample 2 | 0.066 µm to 0.224 µm | 0.117 µm to 0.209 µm |
| Sample 3 | 0.066 µm to 0.224 µm | 0.117 µm to 0.209 µm |
| Sample 4 | 0.117 µm to 0.209 µm | 0.221 µm to 0.156 µm |
| Sample 5 | 0.152 µm to 0.210 µm | 0.087 µm to 0.124 µm |

In all the samples, the surface roughness (Ra) of the intermediate layer 3 was 1.0 µm or less, and a favorable electrolyte layer 4, a favorable reaction preventing layer 5, and a favorable counter electrode layer 6 could be formed on/over the intermediate layer 3.

Next, regarding samples in which a favorable electrolyte layer 4, a favorable reaction preventing layer 5, and a favorable counter electrode layer 6 could not be formed on/over the intermediate layer 3 and whose open circuit voltages (OCVs) did not reach 1 V or higher at 750°C, the surface roughnesses (Ra) of the intermediate layers 3 were measured using a laser microscope. Table 2 shows the results.

**Table 2**

| | Surface roughness (Ra) of intermediate layer | |
|---|---|---|
| | Calculated value for 259-µm width | Calculated value for 642-µm width |
| Sample 6 | 1.624 µm to 2.499 µm | 1.350 µm |
| Sample 7 | 3.718 µm to 8.230 µm | 2.596 µm to 6.094 µm |

In both samples, the surface roughness (Ra) of the intermediate layer 3 was greater than 1.0 µm.

It was shown from the above results that setting the surface roughness (Ra) of the intermediate layer 3 to 1.0 µm or less makes it possible to obtain a favorable substrate with an electrode layer for a metal-supported electrochemical element.

### Second Embodiment

An electrochemical element E according to this embodiment has a configuration in which the intermediate layer 3 is not provided, that is, the electrode layer 2 and the electrolyte layer 4 are in contact with each other. Therefore, in the manufacturing method for the electrochemical element E, the intermediate layer forming step is omitted.

The electrochemical element E according to this embodiment includes the metal substrate 1 (metal support), the electrode layer 2 formed on/over the metal substrate 1, and the electrolyte layer 4 formed on/over the electrode layer 2. The electrochemical element E further includes the reaction preventing layer 5 formed on/over the electrolyte layer 4, and the counter electrode layer 6 formed on/over the reaction preventing layer 5. Specifically, the counter electrode layer 6 is formed above the electrolyte layer 4, and the reaction preventing layer 5 is formed between the electrolyte layer 4 and the counter electrode layer 6. The electrode layer 2 is porous, and the electrolyte layer 4 is dense.

### Substrate with Electrode Layer

In this embodiment, a substrate with an electrode layer B for a metal-supported electrochemical element is configured to include the metal substrate 1 (metal support), and the electrode layer 2 formed on/over the metal substrate 1. That is, in this embodiment, the electrochemical element E is configured to include the substrate with an electrode layer B, the electrolyte layer 4, the reaction preventing layer 5, and the counter electrode layer 6.

In this embodiment, the electrode layer 2 has a region with a surface roughness (Ra) of 1.0 µm or less. This region may correspond to all or a part of the surface of the electrode layer 2. An electrochemical element E that has excellent performance, reliability, and durability as well as good adhesion between the electrode layer 2 and the electrolyte layer 4 can be configured due to the electrode layer 2 having a region with a surface roughness (Ra) of 1.0 µm or less. Moreover, the electrolyte layer 4 can be kept uniform even if the electrolyte layer 4 is constituted by a thin film, thus making it possible to configure an electrochemical element that has excellent performance, reliability, and durability. It should be noted that the electrode layer 2 more preferably has a region with a surface roughness (Ra) of 0.5 µm or less, and even more preferably 0.3 µm or less. The reason for this is that an electrochemical element E that is excellent in the above-described effects can be formed if the electrode layer 2 is smoother in terms of the surface roughness.

### Manufacturing Method for Electrochemical Element

Next, a manufacturing method for the electrochemical element E according to this embodiment will be described. The electrochemical element E according to this embodiment does not include the intermediate layer 3. Accordingly, in the manufacturing method for the electrochemical element E according to this embodiment, the electrode layer forming step (diffusion suppressing layer forming step), the electrolyte layer forming step, the reaction preventing layer forming step, and the counter electrode layer forming step are performed in the stated order.

### Electrode Layer Forming Step

In the electrode layer forming step, the electrode layer 2 is formed as a thin film in a region that is broader than the region provided with the through holes 1a, on/over the front surface of the metal substrate 1. The through holes of the metal substrate 1 can be provided through laser processing or the like. As described above, the electrode layer 2 can be formed using low-temperature heating (a wet process using heating treatment in a low temperature range of 1100°C or lower), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Regardless of which technique is used, it is desirable to perform the technique at a temperature of 1100°C or lower in order to suppress deterioration of the metal substrate 1.

The following is an example of the case where low-temperature heating is performed as the electrode layer forming step. First, a material paste is produced by mixing powder of the material for forming the electrode layer 2 and a solvent (dispersion medium), and is applied to the front surface of the metal substrate 1. Then, the electrode layer 2 is obtained through compression shape forming (electrode layer smoothing step) and heating at a temperature of 1100°C or lower (electrode layer heating step). Examples of compression shape forming of the electrode layer 2 include CIP (Cold Isostatic Pressing) shape forming, roll pressing shape forming, and RIP (Rubber Isostatic Pressing) shape forming. It is favorable to perform heating of the electrode layer 2 at a temperature of 800°C or higher and 1100°C or lower. The reason for this is that this temperature makes it possible to form an electrode layer 2 that has high strength while suppressing damage to and deterioration of the metal substrate 1. It is more preferable to perform heating of the electrode layer 2 at a temperature of 1050°C or lower, and more preferably 1000°C or lower. The reason for this is that the electrochemical element E can be formed with damage to and deterioration of the metal substrate 1 being further suppressed as the heating temperature of the electrode layer 2 is reduced.

It should be noted that lapping shape forming, leveling treatment, surface cutting treatment, surface polishing treatment, or the like can also be performed as the electrode layer smoothing step.

In this manner, the electrochemical element E can be manufactured. It should be noted that the substrate with an electrode layer B for a metal-supported electrochemical element can be manufactured by performing the above-described electrode layer forming step. That is, the manufacturing method according to this embodiment is a method for manufacturing a substrate with an electrode layer B for a metal-supported electrochemical element, the substrate including a metal substrate 1 (metal support) and an electrode layer 2 formed on/over the metal substrate 1, and the method includes an electrode layer smoothing step of smoothing the surface of the electrode layer 2 and a low-temperature heating step of performing heating of the electrode layer 2 at a temperature of 1100°C or lower.

### Examples

A metal substrate 1 was produced by providing a plurality of through holes 1a through laser processing in a region with a radius of 2.5 mm from the center of a crofer 22 APU metal plate having a circular shape with a thickness of 0.3 mm and a diameter of 25 mm. It should be noted that, at this time, the through holes 1a on the surface of the metal substrate 1 were provided through laser processing.

Next, a paste was produced by mixing 60 wt% of NiO powder and 40 wt% of YSZ powder and adding an organic binder and an organic solvent (dispersion medium) thereto. The paste was used to form an electrode layer 2 on/over a region with a radius of 3 mm from the center of the metal substrate 1. It should be noted that the electrode layer 2 was formed using screen printing.

Next, CIP shape forming was performed with a pressure of 300 MPa on the metal substrate 1 on/over which the electrode layer 2 was formed, and then heating treatment was performed at 1050°C (electrode layer forming step, diffusion suppressing layer forming step).

The electrode layer 2 obtained through the above-described step had a thickness of about 20 µm. Moreover, the He leakage amount of metal substrate 1 on/over which the electrode layer 2 was formed in this manner was 4.3 mL/minute·cm² under a pressure of 0.1 MPa. It was found from this result that the metal substrate 1 on/over which the electrode layer 2 was formed could be considered to be a substrate with an electrode layer having gas permeability.

Subsequently, an electrolyte layer 4 was formed by spraying an 8YSZ (yttria-stabilized zirconia) component with a mode diameter of about 0.7 µm onto a 15 mm × 15 mm region of the electrode layer 2 of the metal substrate 1 at a supply speed of 6.0 g/minute so as to cover the electrode layer 2 while the substrate was moved at a scanning speed of 5 mm/second (spray coating). It should be noted that, at this time, the metal substrate 1 was not heated (electrolyte layer forming step).

The electrolyte layer 4 obtained through the above-described step had a thickness of approximately 5 to 6 µm. The He leakage amount of the metal substrate 1 on/over which the electrode layer 2 and the electrolyte layer 4 were formed in the manner was measured under a pressure of 0.2 MPa. The determined He leakage amount was smaller than the lower detection limit (1.0 mL/minute·cm²). Accordingly, it was found that the formed electrolyte layer 4 had gas barrier properties.

Next, a paste was produced by adding an organic binder and an organic solvent (dispersion medium) to fine powder of GDC. The paste was used to form a reaction preventing layer 5 on/over the electrolyte layer 4 of the electrochemical element E using screen printing.

Thereafter, the reaction preventing layer 5 having a flat surface was formed by performing CIP shape forming with a pressure of 300 MPa on the electrochemical element E on/over which the reaction preventing layer 5 was formed and then performing heating treatment at 1000°C (reaction preventing layer forming step).

Furthermore, a paste was produced by mixing GDC powder and LSCF powder and adding an organic binder and an organic solvent thereto. The paste was used to form a counter electrode layer 6 on/over the reaction preventing layer 5 using screen printing. Lastly, a final electrochemical element E was obtained by heating, at 900°C, the electrochemical element E on/over which the counter electrode layer 6 was formed (counter electrode layer forming step).

Hydrogen gas and air were respectively supplied to the electrode layer 2 and the counter electrode layer 6, and the open circuit voltage (OCV) of the obtained electrochemical element E serving as a cell for a solid oxide fuel cell was measured. The result was 1.05 V at 750°C.

Another sample was produced in the same manner, and the surface roughness (Ra) of the electrode layer 2 of this sample was measured using a laser microscope. Table 3 shows the results.

**Table 3**

| | Surface roughness (Ra) of electrode layer | |
|---|---|---|
| | Calculated value for 259-µm width | Calculated value for 642-µm width |
| Sample 8 | 0.12 µm to 0.165 µm | 0.237 µm to 0.276 µm |

In Sample 8, the surface roughness (Ra) of the electrode layer 2 was 1.0 µm or less, and a favorable electrolyte layer 4, a favorable reaction preventing layer 5, and a favorable counter electrode layer 6 could be formed on/over the electrode layer 2.

It was shown from the above results that setting the surface roughness (Ra) of the electrode layer 2 to 1.0 µm or less makes it possible to obtain a favorable substrate with an electrode layer for a metal-supported electrochemical element.

### Third Embodiment

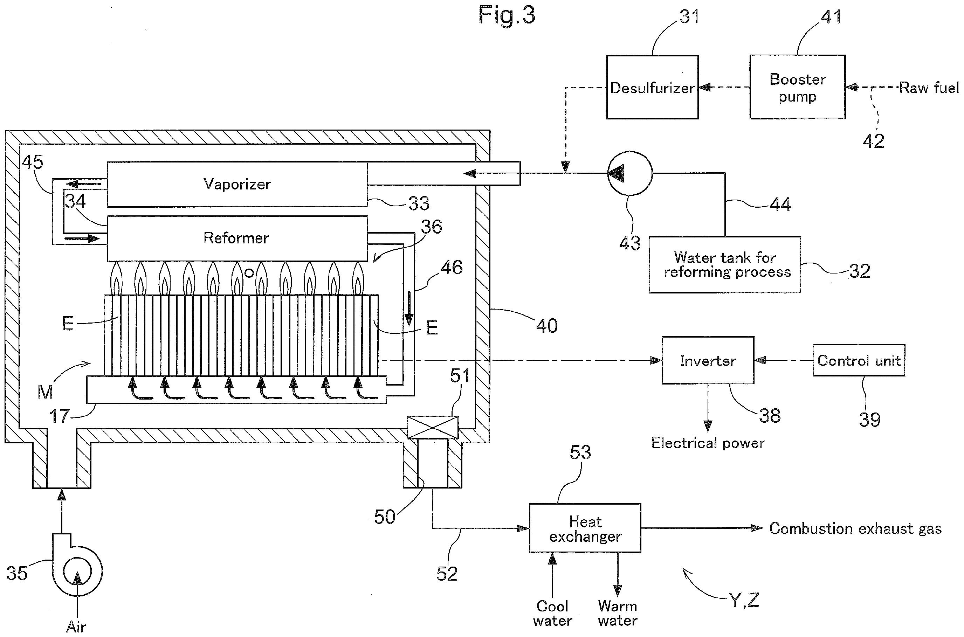

An electrochemical element E, an electrochemical module M, an electrochemical device Y, and an energy system Z according to this embodiment will be described with reference to FIGS. 2 and 3.

As shown in FIG. 2, in the electrochemical element E according to this embodiment, a U-shaped member 7 is attached to the back surface of the metal substrate 1, and the metal substrate 1 and the U-shaped member 7 form a tubular support.

The electrochemical module M is configured by stacking a plurality of electrochemical elements E with collector members 26 being sandwiched therebetween. Each of the collector member 26 is joined to the counter electrode layer 6 of the electrochemical element E and the U-shaped member 7, and electrically connects them.

The electrochemical module M includes a gas manifold 17, the collector members 26, a terminal member, and a current extracting unit. One open end of each tubular support in the stack of the plurality of electrochemical elements E is connected to the gas manifold 17, and gas is supplied from the gas manifold 17 to the electrochemical elements E. The supplied gas flows inside the tubular supports, and is supplied to the electrode layers 2 through the through holes 1a of the metal substrates 1.

FIG. 3 shows an overview of the energy system Z and the electrochemical device Y.

The energy system Z includes the electrochemical device Y, and a heat exchanger 53 serving as a waste heat management unit that reuses heat discharged from the electrochemical device Y.

The electrochemical device Y includes the electrochemical module M and a fuel supply unit that includes a desulfurizer 31 and a reformer 34 and supplies fuel gas containing a reducible component to the electrochemical module M, and the electrochemical device Y includes an inverter 38 that extracts electrical power from the electrochemical module M.

Specifically, the electrochemical device Y includes the desulfurizer 31, a reformed water tank (water tank for reforming process) 32, a vaporizer 33, the reformer 34, a blower 35, a combustion unit 36, the inverter 38, a control unit 39, a storage container 40, and the electrochemical module M.

The desulfurizer 31 removes sulfur compound components contained in a hydrocarbon-based raw fuel such as city gas (i.e., performs desulfurization). When a sulfur compound is contained in the raw fuel, the inclusion of the desulfurizer 31 makes it possible to suppress the influence that the sulfur compound has on the reformer 34 or the electrochemical elements E. The vaporizer 33 produces water vapor from reformed water supplied from the reformed water tank 32. The reformer 34 uses the water vapor produced by the vaporizer 33 to perform steam reforming of the raw fuel desulfurized by the desulfurizer 31, thus producing reformed gas containing hydrogen.

The electrochemical module M generates electricity by causing an electrochemical reaction to occur with use of the reformed gas supplied from the reformer 34 and air supplied from the blower 35. The combustion unit 36 mixes the reaction exhaust gas discharged from the electrochemical module M with air, and burns combustible components in the reaction exhaust gas.

The electrochemical module M includes a plurality of electrochemical elements E and the gas manifold 17. The electrochemical elements E are arranged side-by-side and electrically connected to each other, and one end portion (lower end portion) of each of the electrochemical elements E is fixed to the gas manifold 17. The electrochemical elements E generate electricity by causing an electrochemical reaction to occur between the reformed gas supplied via the gas manifold 17 and air supplied from the blower 35.

The inverter 38 adjusts the electrical power output from the electrochemical module M to obtain the same voltage and frequency as electrical power received from a commercial system (not shown). The control unit 39 controls the operation of the electrochemical device Y and the energy system Z.

The vaporizer 33, the reformer 34, the electrochemical module M, and the combustion unit 36 are stored in the storage container 40. The reformer 34 performs reformation processing on the raw fuel with use of combustion heat produced by the combustion of reaction exhaust gas in the combustion unit 36.

The raw fuel is supplied to the desulfurizer 31 via a raw fuel supply passage 42, due to operation of a booster pump 41. The reformed water in the reformed water tank 32 is supplied to the vaporizer 33 via a reformed water supply passage 44, due to operation of a reformed water pump 43. The raw fuel supply passage 42 merges with the reformed water supply passage 44 at a location on the downstream side of the desulfurizer 31, and the reformed water and the raw fuel, which have been merged outside of the storage container 40, are supplied to the vaporizer 33 provided in the storage container 40.

The reformed water is vaporized by the vaporizer 33 to produce water vapor. The raw fuel, which contains the water vapor produced by the vaporizer 33, is supplied to the reformer 34 via a vapor-containing raw fuel supply passage 45. In the reformer 34, the raw fuel is subjected to steam reforming, thus producing reformed gas that includes hydrogen gas as a main component (first gas including a reducible component). The reformed gas produced in the reformer 34 is supplied to the gas manifold 17 of the electrochemical module M via a reformed gas supply passage 46.

The reformed gas supplied to the gas manifold 17 is distributed among the electrochemical elements E, and is supplied to the electrochemical elements E from the lower ends, which are the connection portions where the electrochemical elements E and the gas manifold 17 are connected to each other. Mainly the hydrogen (reducible component) in the reformed gas is used in the electrochemical reaction in the electrochemical elements E. The reaction exhaust gas, which contains remaining hydrogen gas not used in the reaction, is discharged from the upper ends of the electrochemical elements E to the combustion unit 36.

The reaction exhaust gas is burned in the combustion unit 36, and combustion exhaust gas is discharged from a combustion exhaust gas outlet 50 to the outside of the storage container 40. A combustion catalyst unit 51 (e.g., a platinum-based catalyst) is provided in the combustion exhaust gas outlet 50, and reducible components such as carbon monoxide and hydrogen contained in the combustion exhaust gas are removed by combustion. The combustion exhaust gas discharged from the combustion exhaust gas outlet 50 is sent to the heat exchanger 53 via a combustion exhaust gas discharge passage 52.

The heat exchanger 53 uses supplied cool water to perform heat exchange on the combustion exhaust gas produced by combustion in the combustion unit 36, thus producing warm water. In other words, the heat exchanger 53 operates as a waste heat management unit that reuses heat discharged from the electrochemical device Y.

It should be noted that instead of the waste heat management unit, it is possible to provide a reaction exhaust gas using unit that uses the reaction exhaust gas that is discharged from (not burned in) the electrochemical module M. The reaction exhaust gas contains remaining hydrogen gas that was not used in the reaction in the electrochemical elements E. In the reaction exhaust gas using unit, the remaining hydrogen gas is used to achieve effective energy utilization by heat utilization through combustion, power generation in a fuel cell, or the like.

### Fourth Embodiment

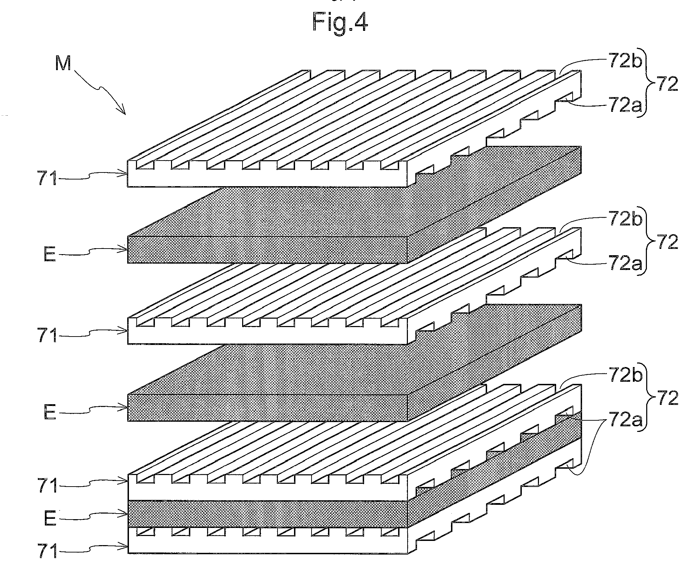

FIG. 4 shows another embodiment of the electrochemical module M. The electrochemical module M according to this embodiment is configured by stacking the above-described electrochemical elements E with cell connecting members 71 being sandwiched therebetween.

The cell connecting members 71 are each a plate-shaped member that has electron conductivity and does not have gas permeability, and the upper surface and the lower surface are respectively provided with grooves 72 that are orthogonal to each other. The cell connecting members 71 can be formed using a metal such as stainless steel or a metal oxide.

As shown in FIG. 4, when the electrochemical elements E are stacked with the cell connecting members 71 being sandwiched therebetween, a gas can be supplied to the electrochemical elements E through the grooves 72. Specifically, the grooves 72 on one side are first gas passages 72a and supply gas to the front side of one electrochemical element E, that is to say the counter electrode layer 6. The grooves 72 on the other side are second gas passages 72b and supply gas from the back side of one electrochemical element E, that is, the back side of the metal substrate 1, through the through holes 1a to the electrode layers 2.

In the case of operating this electrochemical module M as a fuel cell, oxygen is supplied to the first gas passages 72a, and hydrogen is supplied to the second gas passages 72b. Accordingly, a fuel cell reaction progresses in the electrochemical elements E, and electromotive force and electrical current are generated. The generated electrical power is extracted to the outside of the electrochemical module M from the cell connecting members 71 at the two ends of the stack of electrochemical elements E.

It should be noted that although the grooves 72 that are orthogonal to each other are respectively formed on the front surface and the back surface of each of the cell connecting members 71 in this embodiment, grooves 72 that are parallel to each other can be respectively formed on the front surface and the back surface of each of the cell connecting members 71.

### Other Embodiments

(1) Although the electrochemical elements E are used in a solid oxide fuel cell in the above-described embodiments, the electrochemical elements E can also be used in a solid oxide electrolytic cell, an oxygen sensor using a solid oxide, and the like.
(2) Although the present application is applied to a metal-supported solid oxide fuel cell in which the metal substrate 1 serves as a support in the above-described embodiments, the present application can also be applied to an electrode-supported solid oxide fuel cell in which the electrode layer 2 or counter electrode layer 6 serves as a support, or an electrolyte-supported solid oxide fuel cell in which the electrolyte layer 4 serves as a support. In such cases, the functions of a support can be obtained by forming the electrode layer 2, counter electrode layer 6, or electrolyte layer 4 to have a required thickness.
(3) In the above-described embodiments, a composite material such as NiO-GDC, Ni-GDC, NiO-YSZ, Ni-YSZ, CuO-CeO₂, or Cu-CeO₂ is used as the material for forming the electrode layer 2, and a complex oxide such as LSCF or LSM is used as the material for forming the counter electrode layer 6. With this configuration, the electrode layer 2 serves as a fuel electrode (anode) when hydrogen gas is supplied thereto, and the counter electrode layer 6 serves as an air electrode (cathode) when air is supplied thereto, thus making it possible to use the electrochemical element E as a cell for a solid oxide fuel cell. It is also possible to change this configuration and thus configure an electrochemical element E such that the electrode layer 2 can be used as an air electrode and the counter electrode layer 6 can be used as a fuel electrode. That is, a complex oxide such as LSCF or LSM is used as the material for forming the electrode layer 2, and a composite material such as NiO-GDC, Ni-GDC, NiO-YSZ, Ni-YSZ, CuO-CeO₂, or Cu-CeO₂ is used as the material for forming the counter electrode layer 6. With this configuration, the electrode layer 2 serves as an air electrode when air is supplied thereto, and the counter electrode layer 6 serves as a fuel electrode when hydrogen gas is supplied thereto, thus making it possible to use the electrochemical element E as a cell for a solid oxide fuel cell.

It should be noted that the configurations disclosed in the above-described embodiments can be used in combination with configurations disclosed in other embodiments as long as they are compatible with each other. The embodiments disclosed in this specification are illustrative, and embodiments of the present invention are not limited thereto and can be modified as appropriate without departing from the object of the present invention.

### Industrial Applicability

The present invention can be applied to an electrochemical element and a cell for a solid oxide fuel cell.

### List of Reference Numerals

- 1:: Metal substrate (metal support)
- 1a:: Through hole
- 2:: Electrode layer
- 3:: Intermediate layer
- 4:: Electrolyte layer
- 4a:: Upper surface of electrolyte layer
- 5:: Reaction preventing layer
- 6:: Counter electrode layer
- B:: Substrate with electrode layer
- E:: Electrochemical element
- M:: Electrochemical module
- Y:: Electrochemical device
- Z:: Energy system

## Claims

1. A substrate with an electrode layer for a metal-supported electrochemical element, comprising:
a metal support; and
an electrode layer formed on/over the metal support,
wherein the electrode layer has a region with a surface roughness (Ra) of 1.0 µm or less.

2. A substrate with an electrode layer for a metal-supported electrochemical element, comprising:
a metal support;
an electrode layer formed on/over the metal support; and
an intermediate layer formed on/over the electrode layer,
wherein the intermediate layer has a region with a surface roughness (Ra) of 1.0 µm or less.

3. The substrate with an electrode layer for a metal-supported electrochemical element according to claim 1 or 2,
wherein the electrode layer is formed on/over one surface of the metal support, and the metal support is provided with a through hole that penetrates the metal support from one surface to the other surface.

4. The substrate with an electrode layer for a metal-supported electrochemical element according to any one of claims 1 to 3,
wherein the metal support is a metal plate subjected to hole formation processing.

5. An electrochemical element comprising:
the substrate with an electrode layer for a metal-supported electrochemical element according to any one of claims 1 to 4;
a counter electrode layer; and
an electrolyte layer arranged between the electrode layer and the counter electrode layer.

6. An electrochemical module in which a plurality of the electrochemical elements according to claim 5 are arranged in a stacked state.

7. A solid oxide fuel cell comprising the electrochemical element according to claim 5,
wherein a power generation reaction is caused in the electrochemical element at a temperature between 600°C and 850°C inclusive during a rated operation.

8. A manufacturing method for a substrate with an electrode layer for a metal-supported electrochemical element, the substrate comprising a metal support and an electrode layer formed on/over the metal support, the manufacturing method comprising:
an electrode layer smoothing step of smoothing the electrode layer.

9. The manufacturing method according to claim 8, comprising:
an electrode layer heating step of performing heating of the electrode layer at a temperature of 1100°C or lower.

10. The manufacturing method according to claim 8 or 9,
wherein compression shape forming is performed as the electrode layer smoothing step.

11. A manufacturing method for a substrate with an electrode layer for a metal-supported electrochemical element, the substrate comprising a metal support, an electrode layer formed on/over the metal support, and an intermediate layer formed on/over the electrode layer, the manufacturing method comprising:
an intermediate layer smoothing step of smoothing the intermediate layer.

12. The manufacturing method according to claim 11, comprising:
an intermediate layer heating step of performing heating of the intermediate layer at a temperature of 1100°C or lower.

13. The manufacturing method according to claim 11 or 12,
wherein compression shape forming is performed as the intermediate layer smoothing step.
